# EUROPÄISCHE PATENTSCHRIFT

(11) **EP 1 427 286 B1**
(45) Veröffentlichungstag und Bekanntmachung des Hinweises auf die Patenterteilung: **30.06.2010**
(21) Anmeldenummer: 02797602.6
(22) Anmeldetag: 21.08.2002
(51) Int. Cl.: A01N 43/707

(54) **VERFAHREN ZUR FRUCHTAUSDÜNNUNG**
METHOD FOR THINNING FRUIT
PROCEDE D'ECLAIRCISSAGE DE FRUITS

(30) Priorität: 03.09.2001 DE 10143084
(43) Veröffentlichungstag der Anmeldung: 16.06.2004
(73) Patentinhaber: Quena Plant Protection, a branch of Fahrenheit Holding B.V., Curacao (AN)
(72) Erfinder: BAUR, Peter, 65817 Eppstein (DE); BENZ, Wolfgang, 51399 Burscheid (DE); FÜRSCH, Helmut, 42799 Leichlingen (DE); PITTA, Leonardo, 51371 Leverkusen (DE); WIRTH, Wolfgang, 51429 Bergisch Gladbach (DE); SCHRÖDER, Michael, 88378 Unterwaldhausen (DE)
(74) Vertreter: Modiano, Micaela Nadia
(86) Internationale Anmeldenummer: PCT/EP2002/009330
(87) Internationale Veröffentlichungsnummer: WO 2003/020034

(56) Entgegenhaltungen:
- DE-A- 2 224 161
- R.E. BYERS ET AL.: "Apple thinning by photosynthetic inhibition" J. AMER. SOC. HORT. SCI., Bd. 115, Nr. 1, 1990, Seiten 14-19, XP001120641 in der Anmeldung erwähnt

## Beschreibung

Die vorliegende Erfindung betrifft ein Verfahren zur Fruchtausdünnung unter Verwendung von Metamitron-haltigen Ausdünnungsmitteln.

Die Ausdünnung gilt weithin als die wirtschaftlich wichtigste Maßnahme im Kernobstanbau wie auch im Erwerbsanbau zahlreicher anderer Obstkulturen. Unter Ausdünnung versteht man die Reduktion der Anzahl der befruchteten Blüten bzw. der Fruchtanzahl durch mechanische (maschinell oder durch Handausdünnung) oder durch chemische Mittel. Durch Ausdünnung erzielbare Vorteile sind die Verbesserung der Fruchtgröße, -farbe, und/oder -qualität mit erheblicher Steigerung der Wirtschaftlichkeit, die Verbesserung der Blüte im Nachfolgejahr einer guten Blüte bzw. die Brechung und Verhinderung der Alternanz bei gefährdeten Sorten und Junganlagen sowie die Vermeidung des Brechens überladener Äste, einer starken Erschöpfung des Baums und einer damit einhergehenden reduzierten Kältehärte des Baumes.

In den meisten Anbauregionen kommt eine Handausdünnung aus Kostengründen nicht in Frage. Die maschinelle Ausdünnung ist nur begrenzt einsetzbar, u a. wegen der Schwierigkeit möglichst ohne Verletzung des Baums gut wirksam zu sein, wegen der Empfindlichkeit von Sorten/Bäumen und der Notwendigkeit bestimmter Erziehungsformen der Bäume (Anbaumethode).

Daher hat die chemische Ausdünnung eine starke Bedeutung. Heutzutage angewendete chemische Ausdünnungsmittel wie Harnstoff und Ammoniumthiosulfat (die für diesen Zweck in Deutschland nicht zugelassen sind), besitzen jedoch eine wenig zufriedenstellende Wirksicherheit und sind in den eingesetzten, notwendigerweise hohen Konzentrationen oft schlecht pflanzenverträglich. Auch andere bisher nicht (oder nicht mehr) in Deutschland zugelassene Ausdünnungsmittel sind in ihrer Wirkung und Pflanzenverträglichkeit nicht vollkommen praxistauglich, da abhängig vom Entwicklungsstand der Frucht (Blüte) und den klimatischen Bedingungen bei und nach der Applikation immer eine sehr stark ausgeprägte, sortenabhängige Wirkungsunsicherheit beobachtet wurde. Alle diese bekannten Ausdünnungsmittel wirken über den Hormonhaushalt der Pflanze (z.B. Einwirkung über die Pflanzenhormone Auxin und Ethylen beim Apfel). Dadurch bedingt werden mit den Mitteln oft unerwünschte Wirkungen beobachtet wie z.B. eine Minderwirkung bei niedrigen Konzentrationen, eine übermäßige Ausdünnung bei ungünstigen Bedingungen zum Applikationszeitpunkt oder teilweise sogar die Förderung des Fruchtbehanges. Die in vielen Ländern eingesetzten Mittel aus der Gruppe der Carbamate sind zudem als Insektizid nur begrenzt einsetzbar.

Die Verwendung von Photosynthese-inhibierenden Wirkstoffen zur Fruchtausdünnung wurde in J. Amer. Soc. Hort. Sci. 115(1): 14 - 19 (1990) beschrieben. Die darin genannten Photosynthese-inhibibierenden Wirkstoffe haben aber bisher keine kommerzielle Anwendung als Ausdünnungsmittel gefunden, da die Pflanzenverträglichkeit unbefriedigend ist (z.B. bei Metribuzin). W. Guzewski hat die Verwendung des Photosynthese-inhibierenden Wirkstoffs Metamitron untersucht (veröffentlicht in Warsaw Agricultural University- SGGW, Faculty of Horticulture, Annual Report 1995, Warsaw 1996). Danach wurden bei Sprühung von Metamitron 7 Tage nach der Blüte in einer Anwendungsmenge von 500 mg/l und 700 mg/l einer "Golden Delicious"-Apfelsorte eine Zunahme des Fruchtgewichts gegenüber einem Standard von 98g auf 150 bzw. 180 g beobachtet. Die Methode hat allerdings bisher keinerlei kommerzielle Bedeutung erlangt. Dies dürfte darin begründet sein, dass bei den beschriebenen Aufwandmengen Schäden der Pflanzen (Blattnekrosen) beobachtbar sind und bei ungünstigen Verhältnissen auch Überdünnung mit Ausbeuteverlusten auftritt. Aufgrund des frühen Anwendungszeitraums (7 Tage nach der Blüte) handelt es sich zudem um ein Blütenausdünnungsverfahren.

Überaschenderweise wurde nun mehrere Jahre nach der Veröffentlichung von Guzewski gefunden, dass man eine effiziente Fruchtausdünnung (und nicht Blütenausdünnung) ohne Pflanzenschäden durchführen kann, wenn man ein anwendungsfertiges Ausdünnungsmittel (z.B. eine Spritzbrühe) enthaltend 50 - 400 mg/l Metamitron auf die Pflanzenorgane, insbesondere die Früchte, aufbringt. Im Gegensatz zu Aufwandmengen von 700 mg/l treten auch keine Überdünnungen mit Ausbeuteverlusten und keine Blattnekrosen auf. Die Kulturpflanzen zeigen keine oder nur kaum erkennbare Schädigungen. Die Mittel sind daher gut pflanzenverträglich. Das erfindungsgemäße Verfahren vermeidet zudem das Auftreten von Alternanz in den Kulturen.

Unter einem späten Fruchtstadium wird dabei insbesondere die Ausbringung im späteren Fruchtstadium, bevorzugt im 8 bis 30 mm-, besonders bevorzugt 8 bis 17 mm-, insbesondere bevorzugt 10 bis 12-mm-, Fruchstadium oder später verstanden. Diese Vorgehensweise erlaubt die selektive Fruchtausdünnung nach Beobachtung des tatsächlichen Fruchtanfalls auch noch bis einschließlich zum Junifall. Eine solche Methode zur effektiven Fruchtausdünnung in einem späten Stadium ohne Pflanzenschädigung ist bisher nicht bekannt geworden.

Bei dem erfindungsgemäßen Verfahren werden anwendungsfertige Fruchtausdünnungsmittel enthaltend 150 - 400 mg/l Metamitron verwendet, die teilweise neu und dann ebenfalls Gegenstand der vorliegenden Anmeldung sind.

Die erfindungsgemäßen anwendungsfertigen Ausdünnungsmittel enthalten bevorzugt 150 - 375 mg/l und ganz besonders bevorzugt 200 - 350 mg/l Metamitron, wobei ein Metamitrongehalt von 350 mg/l als für die meisten Anwendungszwecke ideal angesehen wird.

Die erfindungsgemäßen Fruchtausdünnungsmittel werden vorteilhafterweise auf Wasserbasis hergestellt.

Die erfindungsgemäßen Fruchstausdünnungsmittel enthalten neben Metamitron gegebenenfalls noch Zusatzstoffe, andere Ausdünnungsmittel, Wachstumsregulatoren, Blattdünger und agrochemische Wirkstoffe.

Als Zusatzstoffe, die in den erfindungsgemäßen Ausdünnungsmitteln enthalten sein können, kommen weitere agrochemische Wirkstoffe sowie Kristallisationsinhibitoren, Netzmittel, Emulgatoren und auch Wasser in Frage.

Als Kristallisationsinhibitoren, die in den erfindungsgemäßen Ausdünnungsmitteln vorhanden sein können, kommen alle üblicherweise für derartige Zwecke in agrochemischen Mitteln einsetzbaren Stoffe in Frage. Vorzugsweise genannt seien N-Alkyl-pyrrolidone, wie N-Octyl-pyrrolidon und N-Dodecylpyrrolidon, ferner Co-Polymerisate von Polyvinyl-pyrrolidon und Polyvinylalkohol, wie zum Beispiel das unter der Bezeichnung Luviskol VA 64^{®} (Fa. BASF) bekannte Polyvinylpyrrolidon /Polyvinylalkohol-Copolymerisat, weiterhin Alkylcarbonsäure-dimethylamide, wie Decansäure-dimethylamid oder das unter der Bezeichnung Hallcomid^{®} (Fa. Hall Comp.) bekannte C₆₋₁₂-Alkancarbonsäure-dimethylamid-Gemisch, und außerdem Co-Polymerisate von Ethylendiamin mit Ethylenoxid und Propylenoxid, wie zum Beispiel das unter der Bezeichnung Synperonic^{®} T 304 (Fa. Uniqema) bekannte Produkt.

Als Netzmittel kommen alle üblichen für derartige Zwecke in Ausdünnungsmitteln einsetzbaren Stoffe in Betracht. Vorzugsweise genannt seien Alkylphenolethoxylate, Dialkylsulfosuccinate, wie Dioctylsulfosuccinat-Natrium, Laurylethersulfate, und Polyoxyethylensorbitan-Fettsäureester. Die Verwendung von Silikontensiden als Netzmittel sei besonders erwähnt.

Als Emulgatoren kommen alle üblichen nichtionogenen, anionischen, kationischen und zwitterionischen Stoffe mit oberflächenaktiven Eigenschaften in Frage, die üblicherweise in agrochemischen Mitteln eingesetzt werden. Zu diesen Stoffen gehören Umsetzungsprodukte von Fettsäuren, Fettsäureestern, Fettalkoholen, Fettaminen, Alkylphenolen oder Alkylarylphenolen mit Ethylenoxid und/oder Propylenoxid, sowie deren Schwefelsäureester, Phosphorsäure-mono-ester und Phosphorsäure-di-ester, ferner Umsetzungsprodukte von Ethylenoxid mit Propylenoxid, weiterhin Alkylsulfonate, Alkylsulfate, Arylsulfate, Tetra-alkyl-ammoniumhalogenide, Trialkylaryl-ammoniumhalogenide und Alkylamin-sulfonate. Die Emulgatoren können einzeln oder auch in Mischung eingesetzt werden. Vorzugsweise genannt seien Umsetzungsprodukte von Rizinusöl mit Ethylenoxid im Molverhältnis 1:20 bis 1:60, Umsetzungsprodukte von C₆-C₂₀-Alkoholen mit Ethylenoxid im Molverhältnis 1:5 bis 1:50, Umsetzungsprodukte von Fettaminen mit Ethylenoxid im Molverhältnis 1:2 bis 1:20, Umsetzungsprodukte von 1 Mol Phenol mit 2 bis 3 Mol Styrol und 10 bis 50 Mol Ethylenoxid, Umsetzungsprodukte von C₈-C₁₂-Alkylphenolen mit Ethylenoxid im Molverhältnis 1:5 bis 1:30, Alkylglykoside, C₈-C₁₆-Alkylbenzol-sulfonsäuresalze, wie z.B. Calcium-, Monoethanolammonium-, Diethanolammonium- und Tri-ethanolammonium-Salze.

Als Beispiele für nicht-ionische Emulgatoren seien die unter den Bezeichnungen Pluronic^{®} PE 10 100 (Fa. BASF) und Atlox^{®} 4913 (Fa. Uniqema) bekannten Produkte genannt. Ferner infrage kommen Tristyryl-phenyl-ethoxylate. Als Beispiele für anionische Emulgatoren seien das unter der Bezeichnung Baykanol^{®} SL (= Kondensationsprodukt von sulfoniertem Ditolylether mit Formaldehyd) im Handel befindliche Produkt der Bayer AG genannt sowie phosphatierte oder sulfatierte Tristyryl-phenol-ethoxylate, wobei Soprophor SLK^{®} und Soprophol^{®} 4D 384 (Fa. Rhodia) speziell genannt seien.

Als andere Ausdünnungsmittel, die den erfindungsgemäßen Ausdünnungsmitteln zugesetzt werden können seien Carbaryl, 2-(1-Naphthylessigsäure (NAA), Benzyladenin, Naphthyloxyessigsäure (NES), Gibberillinsäure, Paclobutrazol, Ammoniumthiosulfat und Harnstoff sowie Ethylenbildner wie Ethephon bei schwer ausdünnbaren bzw. leicht alternierenden Apfelsorten wie Elstar oder Red Delicious. Erfindungsgemäße Ausdünnungsmittel, die zusätzlich zum Metamitron Ethephon enthalten seien für die Verwendung der erfindungsgemäßen Ausdünnungsmittel in den schwer ausdünnbaren Kulturen hervorgehoben. Die Ausdünnungsmittel enthalten in diesem Fall vorteilhafterweise 100 bis 1000 mg/l Ethephon.

Als Wachstumsregulator, der gegebenenfalls zugesetzt werden kann, sei Prohexadione-calcium beispielhaft genannt.

Besonders vorteilhaft ist der Zusatz von Blattdüngern, Pflanzenschutzmitteln oder Pflanzenstärkungsmitteln zu den erfindungsgemäßen Ausdünnungsmitteln. Als solche seien genannt: Calciumsalze wie Calciumchlorid, -nitrat und deren Formulierungen (z.B. Düngal®, Wuxal®, Basfoliar®, Bayfolan^{®}), Ammoniumthiosulfat, Ammoniumnitrat, Harnstoff, Eisenchelate, Magnesiumsulfat und Spurenmineralien wie Bor, Zink, Mangan u.a., wobei Harnstoff als besonders vorteilhafter Zusatz hervorgehoben sei.

Besonders hervorgehoben sei die Verwendung von Calciumformiat als Blattdünger in den erfindungsgemäßen Fruchtausdünnungsmitteln. Das Calciumformiat ist besonders kostengünstig erhältlich und vermeidet Probleme, die mit den üblicherweise in agrochemischen Formulierungen verwendeten Calciumsalzen auftreten. So ist Calciumformiat z.B. nicht hygroskopisch oder durch alkalische Verunreinigungen (Ca(OH)₂) verunreinigt wie handelsübliches CaCl₂, bei welchem bei direkter Spritzung auf junge Pflanzen sogar Unverträglichkeiten beobachtet wurden, und nicht so schwer wasserlöslich wie CaCO₃. Die neuen Calciumformiat-haltigen Formulierungen sind zudem besser regenfest als die üblicherweise verwendeten Calciumsalze (Nitrat, Carbonat und Chlorid).

Ebenso wie die anderen Calciumsalze ist das Calciumformiat, welches mit den erfindungsgemäßen Ausdünnungsmitteln auf junge Pflanzenorgane (Blätter und Früchte) ausgebracht, bevorzugt gespritzt, wird, gut geeignet Calcium-Mangelerscheinungen bei den Pflanzen und vor allem den Früchten (z.B. Stippe bei Äpfeln) zu vermeiden (siehe z.B. Japanese Patent specification No. J04-202080). Überraschenderweise lässt sich das Calciumformiat auch besonders gut formulieren und Pflanzenunverträglichkeiten wurden nicht beobachtet.

Die erfindungsgemäßen Ausdünnungsmittel enthalten daher bevorzugt 0,1 bis 50 g/l (0,01 - 5 Gew.%) an Calciumformiat, wobei ein Calciumgehalt von 1 bis 20 g/L besonders bevorzugt ist.

Als agrochemische Wirkstoffe können den erfindungsgemäßen Ausdünnungsmitteln als agrochemische Wirkstoffe je nach Anwendungsfall zusätzlich zum Beispiel Fungizide und Insektizide zugesetzt werden.

Als Fungizide seien beispielhaft genannt Schwefel (Netzschwefel), Kupferpräparate, Benzimidazole, Bitertanol, Dichlofluanid, Fenarimol, Fenhexamid, Fludioxonil, Fosetyl-aluminium, Iprodione, Myclobutanil, Penconazole, Triadimenol, Vinclozolin, Tolylfluanid (Euparen M®), Captan, Propineb, Trifloxystrobin, Kresoxim-methyl, Dithianon, Cyprodinil, Pyrimethanil, Mancozeb (Dithane Ultra®) und Metiram, wobei Tolylfluanid besonders hervorgehoben sei.

Als Insektizide seien beispielhaft genannt Dimethoate, Oxydemeton-methyl, Malathion, Parathion-methyl, Phosphamidon, Permethrin, Amitraz, Clofentezin, Cyhalothrin, Beta-cyfluthrin, Fenproximate, Diflubenzuron, Tebufenozide, Imidacloprid, Thiacloprid, Thiametoxam, Clofentezine, Fenoxycarb, Parathion-methyl, XenTari®, Tebufenozide, Diflubenzuron, Pirimicarb, Tebufenpyrad, Fenpyroximate, Rapsöl, Mineralöl und Lecithin, wobei Imidacloprid und Thiacloprid besonders hervorgehoben seien.

Die Herstellung der erfindungsgemäßen Ausdünnungsmittel erfolgt in der Weise, dass man die Komponenten in den jeweils gewünschten Verhältnissen miteinander vermischt.

Die Temperaturen können bei der Herstellung der erfindungsgemäßen Ausdünnungsmittel in einem bestimmten Bereich variiert werden. Man arbeitet im Allgemeinen bei Temperaturen zwischen 10°C und 50°C, vorzugsweise bei Raumtemperatur.

Die erfindungsgemäßen Ausdünnungsmittel werden für den Anwendungszweck vorteilhafterweise aus WP, WG, SL, und SC-Formulierungen der Wirkstoffe und Zusatzstoffe durch Auflösen in einem Lösungsmittel, bevorzugt Wasser, hergestellt. Die Anwendung erfolgt dabei nach üblichen Methoden, also zum Beispiel durch Spritzen, Gießen, Sprühen, Injizieren, Streichen der hergestellten Emulsionen, Suspensionen, Lösungen oder Aerosole.

Die Wasseraufwandmenge an den erfindungsgemäßen Ausdünnungsmitteln kann innerhalb eines größeren Bereiches variiert werden. Sie richtet sich nach den jeweils enthaltenen Wirkstoffen und nach deren Konzentration in den Formulierungen. Eine Aufwandmenge von 500 bis 1500 l/ha wird als bevorzugt angesehen. In der Regel beträgt die Aufwandmenge 1000 l/ha an den erfindungsgemäßen Ausdünnungsmitteln. Bei bestimmten Anbaumethoden können aber auch niedrigere Wasseraufwandmengen von 100 bis 3001 zum Einsatz kommen.

Das heißt, bei dem erfindungsgemäßen Verfahren werden idealer Weise 0,05 bis 0,4 kg/ha (bevorzugt 0,1 bis 0,375 kg/ha, besonders bevorzugt 0,2 bis 0,35 kg/ha) an Metamitron ausgebracht.

Für die Herstellung der erfindungsgemäßen Ausdünnungsmittel kommen übliche Geräte in Betracht, die zur Zubereitung von agrochemischen Formulierungen eingesetzt werden.

Bei dem erfindungsgemäßen Verfahren erfolgt die Aufbringung auf die Pflanzenorgane vorteilhafterweise durch Spritzung der erfindungsgemäßen Mittel. Die Spritzung erfolgt in diesem Fall direkt auf die Pflanzenorgane, insbesondere die Blätter oder Früchte.

Zu den für die Ausdünnung üblichen frühen Spritzterminen ist die Calcium-Aufnahme der erfindungsgemäßen Calciumformiat-haltigen Mittel besonders effizient.

Das erfindungsgemäße Verfahren eignet sich besonders zur Fruchtausdünnung in Kemobstkulturen. Als Kulturen und Sorten seien explizit erwähnt: alle Apfelsorten (z.B. Boskoop, Braebum, Cox Orange, Elstar, Gala, Gloster, Golden Delicious, Fuji, Jamba, James Grieve, Jonagold, Jonathan, Lobo, McIntosh, Red Delicious, Spartan), alle Birnensorten (z.B. Conference), Quitte und die asiatische Birne. Eine Eignung besteht auch für die Steinobstkulturen Pfirsich und Pflaume sowie Olive, Pistazien, Kiwi, Wein oder Zitruskulturen (z.B. Mandarinen).

Die Erfmdung wird durch die folgenden Beispiele veranschaulicht.

### Beispiele

### Ausdünnungsmittel

Eine vorgegebene Menge an Metamitron wird mit den gewünschten Mengen an Zusatzstoffen (z.B. Harnstoff, Silicontenside) vermischt und mit Wasser auf die gewünschte Konzentration aufgefüllt. Die Standards werden ebenfalls durch Auflösen der handelsüblichen Wirkstoffe in Wasser hergestellt.

So wurden z.B. die folgenden Ausdünnungsmittel hergestellt.

### Formulierung 1 (erfindungsgemäß)

Wässrige Spritzbrühe enthaltend 350 mg/l Metamitron, 9 g/l Harnstoff, 60 mg/l eines Silikontensids.

### Formulierung 2 (erfindungsgemäß)

Wässrige Spritzbrühe enthaltend 350 mg/l Metamitron, 2 g/l Harnstoff.

Formulierung 3 (nicht erfindungsgemäß, nur beschränkt pflanzenverträglich) Wässrige Spritzbrühe enthaltend 700 mg/l Metamitron, 2 g/l Harnstoff.

### Formulierung 4

Wässrige Spritzbrühe enthaltend 350 mg/l Metamitron.

### Formulierung 5 (nicht erfindungsgemäß, Standard)

Wässrige Spritzbrühe enthaltend 800 mg/l Amid-Thin^{®} und 300 mg/l Ethephon.

### Formulierung 6 (nicht erfindungsgemäß, Standard)

Wässrige Spritzbrühe enthaltend 850 mg/l Carbaryl (Sevin^{®}).

### Biologische Wirkung

Für die obengenannten Formulierungen wurden bei Spritzversuchen an Äpfeln der Sorte Golden Delicious in der Anbauregion "Altes Land" (Deutschland) folgende Ausdünnungsergebnisse erhalten.

### Tabelle:

Ergebnis der Zwischenauswertung nach Junifall für die Wirkung von Metamitron-Formulierungen auf die Ausdünnung von Golden Delicious (Altes Land).
Wasseraufwand: 10001/ha.

### Nr. 2-6: Blütenausdünnung

### Nr. 7-11: Fruchtausdünnung

| Nr. | Variante | Wirkstoff-Konzentration | Fruchtbehang (% der Kontrolle) |
|---|---|---|---|
| 1 | Kontrolle | - | 100 |
| 2 | Formulierung 1 | 350 ppm | 76 |
| 3 | Formulierung 2 | 350 ppm | 82 |
| 4 | Formulierung 3 | 700 ppm | 85 |
| 5 | Formulierung 4 | 350 ppm | 112 |
| 6 | Formulierung 5 | 800 + 300 ppm | 106 |
| 7 | Formulierung 1 | 350 ppm | 42 |
| 8 | Formulierung 2 | 350 ppm | 33 |
| 9 | Formulierung 3 | 700 ppm | 36 |
| 10 | Formulierung 4 | 350 ppm | 41 |
| 11 | Formulierung 6 | 850 ppm | 70 |

Die Daten zeigen eine Überlegenheit in der Ausdünnung der erfindungsgemäßen Formulierungen gegenüber den Standards. Dieser vorteilhafte Ausdünnungseffekt ist bei späterer Anwendung im 10-12 mm Fruchstadium noch größer.

### Pflanzenverträglichkeit

Nach optischer Bonitur zeigen Formulierungen enthaltend 350 mg/l Metamitron bei Verwendung in Ausdünnungsversuchen verschiedenster Apfelsorten keine oder nur minimale Schäden, während 700 mg/l Metamitron enthaltende Formulierungen unter gleichen Bedingungen minimale bis deutlich erkennbare Schäden verursachen.

## Patentansprüche

1. Verfahren zur Fruchtausdünnung, **dadurch gekennzeichnet, dass** ein anwendungsfertiges Ausdünnungsmittel enthaltend 50 bis 400 mg/l Metamitron auf die Pflanzenorgane im 8 bis 30 mm-Fruchtstadium aufgebracht wird.

2. Verfahren nach Anspruch 1, **dadurch gekennzeichnet, dass** 0,05 bis 0,4 kg/ha Metamitron durch Aufbringung auf die Pflanzenorgane ausgebracht werden.

3. Verfahren nach Anspruch 1 oder 2, **dadurch gekennzeichnet, dass** das Ausdünnungsmittel im 8 bis 17 mm-Fruchtstadium erfolgt.

4. Verfahren nach einem der Ansprüche 1 bis 3, **dadurch gekennzeichnet, dass** das Ausdünnungsmittel 100 bis 375 mg/l Metamitron enthält.

5. Verfahren nach einem der Ansprüche 1 bis 3, **dadurch gekennzeichnet, dass** das Ausdünnungsmittel 150 bis 375 mg/l Metamitron enthält.

6. Verfahren nach einem der Ansprüche 1 bis 5, **dadurch gekennzeichnet, dass** das Ausdünnungsmittel noch Zusatzstoffe aus der Gruppe Blattdünger, weitere Pflanzenschutzmittel oder Pflanzenstärkungsmittel enthält.

7. Verfahren nach Anspruch 6, **dadurch gekennzeichnet, dass** als Zusatzstoff Harnstoff enthalten ist.

8. Verfahren nach Anspruch 6, **dadurch gekennzeichnet, dass** als Zusatzstoff Calciumformiat enthalten ist.

9. Verfahren zur Fruchtausdünnung, **dadurch gekennzeichnet, dass** 0,05 bis 0,4 kg/ha Metamitron durch Aufbringung auf die Pflanzenorgane im 8 bis 30 mm-Fruchtstadium ausgebracht werden.

10. Verfahren nach Anspruch 9, **dadurch gekennzeichnet, dass** das Ausdünnungsmittel im 8 bis 17 mm-Fruchtstadium ausgebracht wird.

11. Verfahren nach einem der Ansprüche 1 bis 10, **dadurch gekennzeichnet, dass** es in Kemobstkulturen oder Steinobstkulturen erfolgt.

12. Fruchtausdünnungsmittel, **dadurch gekennzeichnet, dass** es 50 bis 400 mg/l Metamitron und 0,1 bis 50 g/l Calciumformiat enthält.

13. Fruchtausdünnungsmittel, **dadurch gekennzeichnet, dass** es 50 bis 400 mg/l Metamitron und den Zusatzstoff Harnstoff enthält.

14. Verwendung eines Mittels nach Anspruch 12 oder 13 zur Fruchtausdünnung in Obstkulturen.

15. Verwendung gemäß Anspruch 14, **dadurch gekennzeichnet, dass** sie in Kernobstkulturen oder Steinobstkulturen erfolgt.

## Claims

1. A method for thinning fruit, wherein a ready-to-use thinning formulation comprising 50 to 400 mg/l metamitron is applied to the plant organs at the 8 to 30 mm fruit stage.

2. The method as claimed in claim 1, wherein 0.05 to 0.4 kg/ha metamitron are applied to the plant organs by the application.

3. The method as claimed in claim 1 or 2, wherein the thinning formulation is applied at the 8 to 17 mm fruit stage.

4. The method as claimed in any of claims 1 to 3, wherein the thinning formulation comprises 100 to 375 mg/l metamitron.

5. The method as claimed in any of claims 1 to 3, wherein the thinning formulation comprises 150 to 375 mg/l metamitron.

6. The method as claimed in any of claims 1 to 5, wherein the thinning formulation additionally comprises additives selected from the group consisting of foliar fertilizers, other plant protectants or plant strengthening agents.

7. The method as claimed in claim 6, wherein urea is present as additive.

8. The method as claimed in claim 6, wherein calcium formate is present as additive.

9. A method for thinning fruit, wherein 0.05 to 0.4 kg/ha metamitron are applied by application to the plant organs at the 8 to 30 mm fruit stage.

10. The method as claimed in claim 9, wherein the thinning formulation is applied at the 8 to 17 mm fruit stage.

11. The method as claimed in any of claims 1 to 10, wherein it is carried out in pome fruit crops or stone fruit crops.

12. A fruit thinning formulation which comprises 50 to 400 mg/l metamitron and 0.1 to 50 g/l calcium formate.

13. A fruit thinning formulation which comprises 50 to 400 mg/l metamitron and the additive urea.

14. The use of a formulation as claimed in claim 12 or 13 for thinning fruit in fruit plantations.

15. The use as claimed in claim 14, wherein it is effected in pome fruit crops or stone fruit crops.

## Revendications

1. Procédé d'éclaircissage de fruits, **caractérisé en ce qu'**un agent d'éclaircissage prêt à l'emploi contenant 50 à 400 mg/l de Metamitron est épandu sur les organes végétaux au stade de fruits de 8 à 30 mm.

2. Procédé selon la revendication 1, **caractérisé en ce que** 0,05 à 0,4 kg/ha de Metamitron sont épandus par application sur les organes végétaux.

3. Procédé selon la revendication 1 ou 2, **caractérisé en ce que** l'agent d'éclaircissage est mis en oeuvre au stade de fruits de 8 à 17 mm.

4. Procédé selon une des revendications 1 à 3, **caractérisé en ce que** l'agent d'éclaircissage contient 100 à 375 mg/l de Metamitron.

5. Procédé selon une des revendications 1 à 3, **caractérisé en ce que** l'agent d'éclaircissage contient 150 à 375 mg/l de Metamitron.

6. Procédé selon une des revendications 1 à 5, **caractérisé en ce que** l'agent d'éclaircissage contient en outre des additifs du groupe engrais foliaires, autres produits phytosanitaires ou phytotoniques.

7. Procédé selon la revendication 6, **caractérisé en ce que** de l'urée est contenue comme additif.

8. Procédé selon la revendication 6, **caractérisé en ce que** du formiate de calcium est contenu comme additif.

9. Procédé d'éclaircissage de fruits, **caractérisé en ce que** 0,05 à 0,4 kg/ha de Metamitron sont épandus par application sur les organes végétaux au stade de fruits de 8 à 30 mm.

10. Procédé selon la revendication 9, **caractérisé en ce que** l'agent d'éclaircissage est épandu au stade de fruits de 8 à 17 mm.

11. Procédé selon une des revendications 1 à 10, **caractérisé en ce qu'**il est mis en oeuvre dans des cultures de fruits à pépins ou des cultures de fruits à noyau.

12. Agent d'éclaircissage de fruits, **caractérisé en ce qu'**il contient 50 à 400 mg/l de Metamitron et 0,1 à 50 g/l de formiate de calcium.

13. Agent d'éclaircissage de fruits, **caractérisé en ce qu'**il contient 50 à 400 mg/l de Metamicron et l'additif urée.

14. Utilisation d'un agent selon la revendication 12 ou 13 pour l'éclaircissage de fruits dans les cultures de fruits.

15. Utilisation selon la revendication 14, **caractérisée en ce qu'**elle est mise en oeuvre dans des cultures de fruits à pépins ou de fruits à noyau.
